# EUROPÄISCHE PATENTSCHRIFT

(11) **EP 2 281 022 B1**
(45) Veröffentlichungstag und Bekanntmachung des Hinweises auf die Patenterteilung: **23.11.2011**
(21) Anmeldenummer: 09783325.5
(22) Anmeldetag: 23.09.2009
(51) Int. Cl.: C09J 133/00

(54) **WÄRMELEITENDE HAFTKLEBEMASSE**
THERMALLY CONDUCTIVE ADHESIVE MASS
COMPOSITION ADHÉSIVE DE CONTACT CONDUCTRICE DE CHALEUR

(30) Priorität: 01.10.2008 DE 102008049850
(43) Veröffentlichungstag der Anmeldung: 09.02.2011
(73) Patentinhaber: TESA SE, 20253 Hamburg (DE)
(72) Erfinder: KEITE-TELGENBÜSCHER, Klaus, 22529 Hamburg (DE); STAIGER, Anja, 22459 Hamburg (DE); MEYER, Florian, 22089 Hamburg (DE)
(86) Internationale Anmeldenummer: PCT/EP2009/062320
(87) Internationale Veröffentlichungsnummer: WO 2010/037676

(56) Entgegenhaltungen:
- DE-A1-102007 007 617

## Beschreibung

Die Erfindung betrifft eine hochkohäsive wärmeleitende Haftklebemasse mit einer Polymermasse und mit Aluminiumoxidpartikeln, wobei die Polymermasse eine zumindest im Wesentlichen lösemittelfreie Polymermasse mit einem hochmolekularen Basispolymer auf Acrylatbasis ist, und die Verwendung dieser wärmeleitenden Haftklebemasse zur Herstellung eines wärmeleitenden Flächenelements. Ferner betrifft die Erfindung ein wärmeleitendes Flächenelement mit einer solchen wärmeleitenden Haftklebemasse sowie deren Verwendung zum Wärmetransport innerhalb elektronischer Geräte. Schließlich betrifft die Erfindung die Verwendung von Aluminiumoxidpartikeln in einer Haftklebemasse und ein Verfahren zur Herstellung der Haftklebemasse.

In vielen Technologiegebieten kommt der kontrollierten Wärmeübertragung eine bedeutende Rolle zu. Alle grundlegenden Problemstellungen betreffen hierbei den Transport thermischer Energie (Wärme) von einem Ort höherer Temperatur (Wärmequelle) zu einem Ort niedrigerer Temperatur (Wärmesenke) infolge eines Temperaturunterschiedes (Temperaturgradienten). Eine Möglichkeit der Wärmeübertragung ist die Wärmeleitung; weiterhin ist eine Wärmeübertragung auch im Rahmen eines konvektiven Strömungsprozesses oder aber in Form von Wärmestrahlung möglich.

Typische Wärmequellen sind beispielsweise elektronische Bauelemente, bei deren Betrieb Wärme anfällt, ferner Heizelemente jeglicher Art sowie Gefäße, in denen eine exotherme chemische Reaktion stattfindet.

Typische Wärmesenken sind Kühlerelemente (wie zum Beispiel passive Kühlkörper, Kühler-Lüfter-Kombinationen, Wasserkühler oder Peltier-Elemente) sowie jeder zu erwärmende Körper (beispielsweise abzutauende eisbedeckte Flächen wie etwa Dachrinnen und Oberflächen im Bereich des Automobilbaus oder der Luft- und Raumfahrttechnik).

Ein typisches Problem betrifft das Ableiten von Wärmeenergie, die aufgrund der elektrischen Widerstände von Komponenten einer elektronischen Schaltung als so genannte "Joulesche Wärme" anfällt. Ein effektives Abführen der Wärmeenergie ist insbesondere für Halbleiterbauelemente wie integrierte Schaltungen von Bedeutung, in denen eine Überhitzung die irreversible Zerstörung des Bauelements zur Folge haben kann; hierbei kommen als Wärmesenke häufig die oben genannten Kühlerelemente zum Einsatz, die mit dem Bauelement (Wärmequelle) thermisch leitend verbunden werden. Eine derartige thermisch leitende Verbindung wird mittels einer Zwischenschicht erreicht, die zwischen der Wärmequelle und der Wärmesenke angeordnet ist und den Wärmeübergang zwischen der Wärmequelle und der Wärmesenke verbessert, so dass ein besonders großer Wärmestrom abgeleitet werden kann.

Als Zwischenschichten werden in der Regel Wärmeleitpasten eingesetzt, die auf die Oberfläche des Bauelements und des Kühlerelements aufgetragen werden. Diese Wärmeleitpasten bestehen zum großen Teil aus fluiden Matrixmaterialien, etwa aus niedermolekularen Harzen oder Wachsen. Zur Erhöhung der Wärmeleitfähigkeit werden diesen Matrixmaterialien wärmeleitende Hilfsstoffe in hinreichend großer Menge zugesetzt. Derartige Systeme sind üblicherweise hochverformbar, um sich der Oberfläche der Wärmequelle wie auch der Oberfläche der Wärmesenke anzupassen und so einen großflächigen thermischen Kontakt mit diesen zu gewährleisten. Jedoch sind Wärmeleitpasten nicht in der Lage, einwirkende mechanische Kräfte zu kompensieren, so dass außerdem eine mechanische Fixierung der Wärmesenke an der Wärmequelle erforderlich ist.

Um zusätzlich zu der Wärmeabfuhr auch eine mechanische Verbindung von Wärmequelle und Wärmesenke realisieren zu können, hat sich die Verwendung von wärmeleitenden klebenden Systemen als besonders vorteilhaft herausgestellt. Diese weisen in der Regel Mischungen von Polymeren mit Additiven auf (so genannte "Polymer-Compounds"), die insbesondere im Hinblick auf ihre wärmeleitenden Eigenschaften angepasst werden. Die Polymermischungen werden dabei üblicherweise als Fluidklebesystem oder als Haftklebesystem bereitgestellt. Mittels derartiger Polymermischungen ist es zudem besonders einfach, eine für viele Anwendungen - insbesondere solche im Elektronikbereich - zusätzlich erforderliche elektrische Isolierung zwischen der Wärmequelle und der Wärmesenke zu verwirklichen.

Fluidklebesysteme sind beispielsweise als wärmeleitende Flüssigklebstoffe oder -pasten bekannt. Bei Flüssigklebstoffen handelt es sich um Kleber, die zunächst auf den Verklebungsgrund (Haftgrund, Verklebungssubstrat) flüssig aufgetragen werden und dann *in situ* aushärten. Zur Herstellung der wärmeleitenden Flüssigklebstoffe werden herkömmliche polymere Matrixsysteme, die chemisch (etwa infolge einer Vernetzungsreaktion) oder physikalisch aushärten, mit gut wärmeleitenden Hilfsstoffen versetzt.

Bei solchen wärmeleitenden Flüssigklebstoffen ist jedoch nachteilig, dass sich diese nur ungenügend genau dosieren lassen und dass diese darüber hinaus während des Zusammenfügens von Wärmequelle und Wärmesenke ein Fließverhalten zeigen, das sich nicht hinreichend genau steuern lässt. Dies hat zur Folge, dass die resultierenden Zwischenschichten keine homogene Dicke aufweisen und dass zudem überschüssiges Material an den Kanten der Verklebung austreten kann. Des weiteren ist nachteilig, dass der Anteil der wärmeleitenden Hilfsstoffe an dem wärmeleitenden Flüssigklebstoff relativ hoch gewählt werden muss, um eine hinreichend gute Wärmeleitfähigkeit der Zwischenschicht zu realisieren, was wiederum die Verklebungsfestigkeit des Flüssigklebstoffs stark vermindert.

Haftklebesysteme sind beispielsweise als beidseitig verklebbare Haftetiketten bekannt, etwa als Klebepad oder Klebeband. Diese weisen eine flächige Anordnung aus zumindest einer Haftklebemasse auf und können dabei mit einem permanenten Träger oder aber trägerfrei ausgebildet sein. Bei der Verwendung von Haftklebesystemen können definierte Zwischenschichten erhalten werden, die infolge ihrer Klebkraft zu dem jeweiligen Klebegrund auf diesen einwirkende mechanische Kräfte übertragen und ableiten können, ohne dabei beschädigt zu werden. Wenn jedoch eine besonders hohe Wärmeleitfähigkeit zu realisieren ist, so wird dies auch bei Haftklebesystemen dadurch erreicht, dass der Anteil der wärmeleitenden Hilfsstoffe in dem Haftklebesystem hoch gewählt wird, was wiederum eine Verminderung der Klebkraft und des inneren Zusammenhalts (Kohäsion) des Haftklebesystems zur Folge hat.

Noch problematischer ist die Verminderung der Kohäsion allerdings, wenn das Haftklebesystem zusätzlich zu der guten Wärmeleitfähigkeit elektrisch isolierend sein soll. In diesem Fall sind die besonders gut wärmeleitenden Hilfsstoffe aus Metallen wie etwa Silber, Gold, Aluminium oder Kupfer nicht durchgängig einsetzbar, es muss vielmehr auf nichtmetallische wärmeleitende Werkstoffe ausgewichen werden. Nichtmetallische Werkstoffe weisen jedoch in der Regel eine erheblich geringere Wärmeleitfähigkeit auf als metallische Werkstoffe, so dass bei Verwendung nichtmetallischer Materialien der Hilfsstoffanteil noch größer ausfallen muss, wenn insgesamt eine Wärmeleitfähigkeit des Haftklebesystems erzielt werden soll, die mit der Wärmeleitfähigkeit metallischer Materialien vergleichbar ist.

Als nichtmetallische wärmeleitende Hilfsstoffe kommen insbesondere Aluminiumoxid (Al₂O₃) und Bornitrid (BN) zum Einsatz. Vor allem ersteres ist aufgrund der guten Verfügbarkeit und des günstigen Verhältnisses von Kosten zu erzielbarer Wärmeleitfähigkeit bevorzugt. Als typische nichtmetallische Hilfsstoffe können beispielsweise auch Siliziumdioxid (SiO₂), Titan(VI)-borid (TiB₂), Siliziumnitrid (Si₃N₄), Titandioxid (TiO₂), Magnesiumoxid (MgO), Nickel(II)-oxid (NiO), Kupfer(II)-oxid (CuO) und Eisen(III)-oxid (Fe₂O₃) eingesetzt werden. Darüber hinaus werden eine Vielzahl weiterer nichtmetallischer Werkstoffe als Wärmeleithilfsstoffe verwendet, beispielsweise ZrO₂(MgO), ZrO₂(Y₂O₃), Aluminiumtitanat (Al₂TiO₅), Aluminiumnitrid (AlN), Borcarbid (B₄C), Cordierit, reaktionsgebundenes Silizium-infiltriertes Siliziumcarbid (SiSiC), drucklos gesintertes Siliziumcarbid (SSiC), heißgepresstes Siliziumcarbid (HPSiC), heißisostatisch gepresstes Siliziumcarbid (HIPSiC), reaktionsgebundenes Siliziumnitrid (RBSN), drucklos gesintertes Siliziumnitrid (SSN, heißgepresstes Siliziumnitrid (HPSN) oder heißisostatisch gepresstes Siliziumnitrid (HIPSN)

Als polymeres Matrixsystem eines Haftklebesystems (also als dessen hochmolekulare Bestandteile) sind aus EP 0 566 093 A1, EP 0 942 059 B1 und EP 0 942 060 B1 unter anderem Haftklebemassen bekannt, die auf Estern der Acrylsäure oder Methacrylsäure basieren. Derartige Haftklebemassen zeichnen sich durch eine besonders hohe thermische Beständigkeit und Alterungsstabilität aus. Um eine hohe Verklebungsfestigkeit zu realisieren (insbesondere eine hohe Scherfestigkeit), weisen die Haftklebemassen Comonomere mit freien Säuregruppen auf, beispielsweise Acrylsäure oder Methacrylsäure.

Um aus einem solchen polymeren Matrixsystem eine wärmeleitende Mischung herzustellen, werden die Polymere des Haftklebesystems mit dem wärmeleitenden Hilfsstoff abgemischt (compoundiert) und anschließend gegebenenfalls auf das Substrat oder auf einen permanenten oder temporären Träger aufgetragen. Abmischen und Auftragen können dabei grundsätzlich in der Schmelze, in Lösung oder in Dispersion erfolgen.

Bei einem Abmischen in Lösung wird das polymere Matrixsystem vollständig oder zumindest teilweise in einem geeigneten flüssigen Medium gelöst, dem Lösemittel (der Begriff "Lösemittel" wird hier in einem funktionalen Sinn verwendet und umfasst damit neben den eigentlichen Lösemitteln (beispielsweise Wasser, leichtflüchtige organische Verbindungen, so genannte "VOC"), auch nicht polymerisierte Monomere, in denen die Polymere löslich sind, und Dispersionsmittel.

Anschließend wird der Hilfsstoff unter Rühren in die so erhaltene Lösung eingebracht. Schließlich wird das Lösemittel aus der Mischung entfernt, was üblicherweise möglichst vollständig erfolgen soll, um eine Blasenbildung im Endprodukt zu vermeiden, die ansonsten beim Verdampfen des Lösemittels eintreten könnte. Ähnlich hierzu ist das Abmischen in Dispersion, bei dem das polymere Matrixsystem in dem Lösemittel als Dispersionsmittel nicht gelöst sondern lediglich suspendiert vorliegt.

Wird bei einem Abmischen in Lösung jedoch ein Hilfsstoff eingesetzt, der in dem Lösemittel selber nicht löslich ist und dessen Dichte größer ist als die Dichte der Lösung, so setzt sich der Hilfsstoff infolge der Schwerkraft während des Abmischens ab. Aufgrund dieser Sedimentation weist die Mischung daher nach Entfernen des Lösemittels eine ungleichmäßige Verteilung des Hilfsstoffs in der Polymermatrix auf.

Eine derartige Inhomogenität der wärmeleitenden Mischung kann vermieden werden, wenn das Abmischen bei erhöhten Temperaturen in der Schmelze erfolgt. Die Mischungstemperatur wird hierbei so gewählt, dass diese in der Nähe der Erweichungstemperatur von zumindest einem Teil des polymeren Matrixsystems liegt oder höher ist als diese. Unter solchen Bedingungen besitzt das polymere Matrixsystem eine deutlich niedrigere Viskosität als bei Raumtemperatur (thermoplastisches Verhalten), so dass ein mechanisches Vermischen mit dem hinzugesetzten Hilfsstoff möglich ist, etwa in einem Kneter oder einem Extruder.

Da bei einem solchen Abmischen in der Schmelze kein Lösemittel hinzugesetzt wird (oder dieses allenfalls in geringer Menge zum Einsatz kommt), ist es hierbei auch nicht erforderlich, etwaiges Lösemittel aus der Klebemasse nachträglich zu entfernen. Da somit auch in einem späteren Verfahrensschritt kein Lösemittel in der Klebemasse vorhanden ist und dort verdampfen kann, wird eine Blasenbildung im Endprodukt vermieden, die etwa bei einem Verdampfen des Lösemittels während des Auftragens eintreten könnte. Daher können beim Abmischen und Auftragen aus der Schmelze homogene Beschichtungen selbst dann innerhalb kurzer Zeit erhalten werden, wenn die Klebemasse mit einer großen Schichtdicke aufgetragen wird.

Allerdings können auch bei einem Abmischen und Auftragen aus der Schmelze Probleme auftreten, die ein homogenes Beschichten erschweren oder sogar verhindern. Wie für das zweite Vergleichsbeispiel aus EP 0 942 060 B1 beschrieben, kann bei bestimmten Polymeren im Verlauf der Herstellung von wärmeleitenden Mischungen eine unerwünschte Vernetzung (Gel-Bildung, Vergelen) eintreten, die einen starken Anstieg der Viskosität zur Folge hat und insbesondere bei Abmischen in der Schmelze besonders problematisch ist. Zwar kann ein Vergelen auch beim Abmischen in Lösung auftreten, jedoch kann diesem durch die Wahl geeigneter Polymerkonzentrationen in der Lösung zumindest teilweise entgegengewirkt werden. Für das Abmischen in der Schmelze hingegen ist dieses Phänomen aufgrund der bei diesem Verfahren ohnehin erheblich höheren Viskosität der Mischung besonders kritisch, da aufgrund des zum Teil äußerst starken Viskositätsanstiegs als Folge der Vergelung ein weiteres Verarbeiten der Mischung erschwert oder sogar vollständig verhindert wird, so dass sich bei derartigen Zusammensetzungen ein Haftetikett aus der Schmelze nicht herstellen lässt.

Das Problem einer Vergelung tritt insbesondere beim Hinzufügen von Aluminiumoxid zu einem aufgeschmolzenen Polymer auf, wobei während des Abmischens eine zügig fortschreitende Vernetzung des Polymers beobachtet wird. Bei Verwendung von Aluminiumoxid als wärmeleitendem Hilfsstoff ist es daher in der Regel nicht möglich, die Klebemasse in der Schmelze abzumischen und/oder aus der Schmelze aufzutragen, so dass auf andere wärmeleitende Hilfsstoffe ausgewichen werden muss; diese sind jedoch häufig aus ökonomischen wie auch aus ökologischen Gründen unvorteilhaft.

Eine Aufgabe der vorliegenden Erfindung ist es daher, eine gut wärmeleitende und gleichzeitig elektrisch isolierende hochkohäsive wärmeleitende Haftklebemasse zur Verfügung zu stellen, die diese Nachteile beseitigt, die insbesondere einen guten und belastbaren thermischen Kontakt zu der Oberfläche einer Wärmequelle und/oder einer Wärmesenke bietet, und die zudem leicht verarbeitbar ist.

Diese Aufgabe wird überraschenderweise durch eine hochkohäsive wärmeleitende Haftklebemasse der eingangs genannten Art gelöst, in der das Basispolymer eine mittlere Molekularmasse M_{w} von mindestens 500.000 g/mol aufweist und bei der die Aluminiumoxidpartikel zu einem Anteil von mehr als 95 Gew.-% aus alpha-Aluminiumoxid bestehen, insbesondere zu einem Anteil von 97 Gew.-% oder mehr. In Versuchen wurde gefunden, dass auch bei hohen Temperaturen eine Vergelung der Polymermatrix effizient verhindert werden kann, wenn Aluminiumoxid verwendet wird, dass nahezu vollständig aus alpha-Aluminiumoxid besteht (rhomboedrisches oder trigonales Aluminiumoxid; etwa in Form von Korund) und nur einen sehr geringen Anteil anderer Modifikationen aufweist, etwa kubischen gamma-Aluminiumoxids (aktive Tonerde), amorphen Aluminiumoxids oder gegebenenfalls auch des lediglich so genannten "beta-Aluminiumoxids" (Na₂O * 11 Al₂O₃). Bereits bei Aluminiumoxidpartikeln, die lediglich 95 Gew.-% alpha-Aluminiumoxid enthalten, wurde ein Vergelen oder Vernetzen des Polymers bereits während des Einarbeitens der Aluminiumoxidpartikel in die Schmelze beobachtet, so dass die entstehende Klebemasse nicht mehr geformt oder als homogene Schicht aufgetragen werden konnte.

Ausgehend von den Ergebnissen der experimentellen Untersuchungen wird vermutet, dass der erfindungsgemäße Effekt auf einer gegenüber beta-Aluminiumoxid und gamma-Aluminiumoxid geringeren Wechselwirkung von alpha-Aluminiumoxid mit der polymeren Phase zurückzuführen ist, so dass sich kein übergeordnetes Netzwerk aus mehreren Polymermolekülen ausbildet. Bei einem Massenanteil des gamma-Aluminiumoxids (und/oder gegebenenfalls des beta-Aluminiumoxids) von weniger als 5 Gew.-% bezogen auf die Gesamtmasse der Aluminiumoxidpartikel (entsprechend einem alpha-Aluminiumoxidgehalt von mehr als 95 Gew.-%) kann sich kein über das Klebemassevolumen perkolierendes Netzwerk ausbilden, so dass ein vollständiges Vergelen verhindert wird.

Auf diese Weise ist es möglich, eine vorzeitige Vernetzung oder Vergelung von auf Acrylsäure oder Methacrylsäure oder deren Estern basierenden Polymerkomponenten innerhalb der wärmeleitenden Haftklebemasse zu vermeiden, die bereits im Mischaggregat auftreten kann und einen starken Anstieg der Viskosität zur Folge hat. Bei Berücksichtigung eines hohen alpha-Aluminiumoxidanteils bleiben die entstehenden Mischungen auch weiterhin hervorragend verarbeitbar.

Es gibt hierbei einige Klebemassensysteme, bei denen das Problem des Viskositätsanstiegs besonders groß ist, da es in diesen besonders leicht zu einem Vergelen der Polymermatrix kommt. Aus diesem Grund hat sich für derartige leicht vergelende Klebemassen die Anwendung des erfindungsgemäßen Konzepts als besonders vorteilhaft herausgestellt.

So ist das nachträgliche Vergelen gerade bei Polymeren problematisch, die freie Säuregruppen oder freie Hydroxygruppen enthalten, da bei diesen die Wechselwirkung mit dem Aluminiumoxid besonders stark ist. Daher ist die vorteilhafte Wirkung der vorliegenden Erfindung bei diesen Systemen auch besonders groß.

Ein Vergelen tritt häufig ein, wenn die Polymermasse aus Monomereinheiten aufgebaut ist, die zumindest schwach sauer sind, beispielsweise Acrylate, Methacrylate, deren Ester und Derivate von diesen, insbesondere sofern diese Monomereinheiten in der Polymermasse zu einem hohen Anteil von mindestens 50 Gew.-% vorhanden sind, bezogen auf die Masse der polymeren Anteile der Klebemasse. Derartige Polymermassen kommen vornehmlich dann zum Einsatz, wenn es Klebemassen mit einer besonders hohen Viskosität zu realisieren gilt. Demzufolge ist das erfindungsgemäße Konzept auch bei hochkohäsiven Klebemassen mit derartigen Zusammensetzungen besonders günstig.

Zu einer schnell ablaufenden Gelbildung kommt es auch, wenn das Basispolymer der Polymermasse eine hohe mittlere Molekularmasse M_{w} von mindestens 500.000 g/mol aufweist, insbesondere von mehr als 1.000.000 g/mol, so dass die vorliegende Erfindung ebenfalls bei derartigen Klebemassen besonders sinnvoll ist.

Dabei ist es insbesondere zweckmäßig, wenn die Aluminiumoxidpartikel in der hochkohäsiven wärmeleitenden Haftklebemasse zu einem Anteil von mindestens 20 Gew.-% und höchstens 90 Gew.-% vorliegen, bezogen auf die Masse der Aluminiumoxidpartikel in der Haftklebemasse. Auf diese Weise ist sichergestellt, dass die Haftklebemasse eine ausreichende Klebkraft bei gleichzeitig hohem inneren Zusammenhalt und gutem Wärmeleitverhalten aufweist. Hierbei stellt ein Gehalt von 40 Gew.-% bis 80 Gew.-% einen besonders guten Kompromiss dar, bietet also einen zügigen Wärmetransport bei gleichzeitig gutem Klebeverhalten. Dies ist einerseits auf die hohe Wärmeleitfähigkeit derartiger wärmeleitender Haftklebemassen zurückzuführen, andererseits aber auch einem unter diesen Bedingungen hinreichend hohen inneren Zusammenhalt der Polymermatrix geschuldet, der einen verlässlichen thermischen Kontakt zu den Oberflächen der Wärmequelle und der Wärmesenke auch unter mechanischer Belastung bietet.

Daneben können jedoch auch solche hochkohäsiven wärmeleitenden Haftklebemassen vorteilhaft sein, die Aluminiumoxidpartikel zu einem Anteil von mindestens 20 Gew.-% und höchstens 40 Gew.-% enthalten, nämlich wenn Haftklebemassen mit besonders hoher Verklebungsleistung realisiert werden sollen, oder solche, die Aluminiumoxidpartikel zu einem Anteil von mindestens 80 Gew.-% und höchstens 90 Gew.-% enthalten, nämlich dann, wenn eine besonders hohe Wärmeleitfähigkeit gefordert ist.

Besonders günstig ist es dabei ferner, wenn die Aluminiumoxidpartikel eine massebezogene spezifische Oberfläche von höchstens 1,3 m²/g aufweisen, bevorzugt von weniger als 1,0 m²/g. Es wurde insbesondere bei solchen partikulären Hilfsstoffen mit spezifischen Oberflächen von weniger als 1,3 m²/g beobachtet, dass diese eine deutlich höhere Wärmeleitfähigkeit in der Haftklebemasse zur Folge haben als partikuläre Hilfsstoffe aus demselben Material, die jedoch eine größere spezifische Oberfläche aufweisen. Demzufolge ist es bei Verwendung derartiger Partikel möglich, auch mit einer geringen Menge an Aluminiumoxid in der Haftklebemasse eine insgesamt hohe Wärmeleitfähigkeit zu realisieren. Dadurch kann die Haftklebemasse einen höheren Polymeranteil besitzen und somit eine bessere Kohäsion und auch eine bessere Adhäsion aufweisen.

Insbesondere ist es dabei für die Kohäsion der Klebemasse von Vorteil, wenn die Aluminiumoxidpartikel zusätzlich aus Primärteilchen aufgebaut sind. In diesem Fall weisen die Aluminiumoxidpartikel eine unregelmäßig geformte Oberfläche auf, die nicht glatt ist. Dadurch kann die polymere Phase zumindest zum Teil in die Aluminiumoxidpartikel eindringen, so dass ein besonders hoher innerer Zusammenhalt der Klebemasse verwirklicht wird. Aus Gründen der Porengeometrie ist es dabei insbesondere vorteilhaft, wenn die Primärteilchen einen mittleren Durchmesser von mindestens 1 µm aufweisen oder sogar von mindestens 2 µm, da auf diese Weise gut wärmeleitende Haftklebemassen erhalten werden, deren Kohäsion sogar bei hohen Temperaturen, bei der die Viskosität der Polymermatrix abnimmt, noch hoch genug ist, um insgesamt einen stabilen Zusammenhalt zu gewährleisten.

Darüber hinaus ist es vorteilhaft, wenn die Partikel einen mittleren Durchmesser aus einem Bereich von 2 µm bis 500 µm aufweisen, insbesondere aus einem Bereich von 2 µm bis 200 µm oder sogar aus einem Bereich von 40 µm bis 150 µm. Infolge dieser Ausbildung des Aluminiumoxids wird der thermische Kontakt zu der Wärmquelle und der Wärmesenke sogar noch weiter verbessert, da die Partikel einerseits hinreichend klein sind, um sich der Form der Oberfläche der Wärmquelle und der Wärmesenke exakt anzupassen, andererseits aber auch hinreichend groß, um eine hohe Wärmeleitfähigkeit zu erreichen, ohne dass der innere Zusammenhalt der Haftklebemasse insgesamt beeinträchtigt wird.

Aus dem Stand der Technik ist ferner bekannt, dass es für herkömmliche Haftklebemassen ungünstig ist, wenn eine aus der Schmelze beschichtete Polymermasse mit einem Lösemittelgehalt von weniger als 0,1 Gew.-% eingesetzt wird. Bei derartigen Polymermassen ist die Viskosität bereits ohne zusätzlich eintretende Vergelung relativ hoch, so dass eine weitere Viskositätszunahme infolge von Vergelung selbst dann die Verarbeitung der Klebemasse verhindern kann, wenn das Ausmaß dieser zusätzlichen Vergelung nur gering ist. Daher ist gerade auch bei derartigen lösemittelarmen Systemen die erfindungsgemäße Verwendung von überwiegend aus alpha-Aluminiumoxid bestehenden Partikeln von Vorteil.

Eine solche lösemittelarme Haftklebemasse bietet den Vorteil, dass sie schichtförmig aufgetragen werden kann, ohne dass dabei störende Blasen in der Klebemasse entstehen. Blasenbildung tritt bei in Lösung abgemischten und/oder aufgetragenen Haftklebemassen regelmäßig beim Verdampfen des restlichen Lösemittels auf, wodurch nicht nur das optische Erscheinungsbild beeinträchtigt wird, sondern auch die effektiv für einen Wärmetransport zur Verfügung stehende Fläche verringert wird und zudem die Kohäsion und die Adhäsion der Klebemasse abnimmt.

Eine weitere günstige Anwendung des erfindungsgemäßen Konzepts betrifft die zuvor beschriebene hochkohäsive wärmeleitende Haftklebemasse, die in einem Verfahren erhältlich ist, bei dem die zumindest im Wesentlichen lösemittelfreie Polymermasse ohne Lösemittelzugabe thermisch erweicht wird, der erweichten Polymermasse die Aluminiumoxidpartikel hinzugegeben werden, und die erweichte Polymermasse und die Aluminiumoxidpartikel miteinander mechanisch vermengt werden. Eine auf diese Weise erhältliche Haftklebemasse ist besonders lösemittelarm, was die zuvor beschriebenen Vorteile bietet.

Resultiert bei diesem Verfahren die obige besonders lösemittelarme Haftklebemasse, so ist es bei einem Verfahren zur Herstellung einer hochkohäsiven wärmeleitenden Haftklebemasse auch vorteilhaft, wenn eine zumindest im Wesentlichen lösemittelfreie Polymermasse enthaltend ein hochmolekulares Basispolymer auf Acrylatbasis ohne Lösemittelzugabe thermisch erweicht wird, der erweichten Polymermasse Aluminiumoxidpartikel mit einem Anteil an alpha-Aluminiumoxid von mehr als 95 Gew.-% hinzugegeben werden (bezogen auf die Masse der Aluminiumoxidpartikel) und die erweichte Polymermasse zusammen mit den Aluminiumoxidpartikeln mechanisch vermengt werden.

Ferner bietet die vorliegende Erfindung die Verwendung von Aluminiumoxidpartikeln, die zu einem Anteil von mehr als 95 Gew.-% aus alpha-Aluminiumoxid bestehen, in einer Haftklebemasse. Erst diese Verwendung ermöglicht die Herstellung lösemittelarmer Haftklebemassen mit einem hohen Gehalt an Aluminiumoxid als wärmeleitenden Hilfsstoff, mit denen sich eine hohe Kohäsion und auch Adhäsion bei gleichzeitig guter Wärmeleitfähigkeit erreichen lässt.

Gemäß einem weiteren Aspekt der vorliegenden Erfindung wird ein wärmeleitendes Flächenelement zur Verfügung gestellt, das eine hochkohäsive wärmeleitende Haftklebemasse mit der zuvor beschriebenen Zusammensetzung aufweist. Mit Hilfe dieses wärmeleitenden Flächenelements lässt sich eine Zwischenschicht auf besonders einfache Weise zwischen eine Wärmequelle und eine Wärmesenke einbringen, wobei die Zwischenschicht die in der Wärmequelle entstehende Wärme effizient ableitet und dabei verlässlich arbeitet. Dementsprechend bietet die vorliegende Erfindung zusätzlich die Verwendung der obigen Haftklebemasse zur Herstellung eines wärmeleitenden Flächenelements, wodurch auf besonders einfache Weise ein wärmeleitendes Flächenelement realisiert werden kann, das problemlos und ohne das Erfordernis weiterer Befestigungsmittel mit den Oberflächen von Wärmequellen und Wärmesenken verbunden werden kann und dort eine stabile Verklebung bietet.

Schließlich wird die Verwendung der obigen hochkohäsiven wärmeleitenden Haftklebemasse zum Wärmetransport innerhalb elektronischer Geräte vorgeschlagen, wodurch aufgrund der hohen Verlässlichkeit dieser Haftklebemasse sowie dem damit erzielbaren hervorragenden thermischen Kontakt zwischen der Wärmequelle und der Wärmesenke einer Beschädigung der Komponenten des elektronischen Geräts infolge lokaler Überhitzung effizient entgegengewirkt wird.

Die vorliegende Erfindung betrifft somit im Allgemeinen Haftklebemassen. Als Haftklebemassen werden solche Klebemassen bezeichnet, die bei Raumtemperatur bereits unter relativ schwachem Andruck eine dauerhafte Verklebung mit dem Substrat erlauben. Die Verklebbarkeit von Haftklebemassen beruht unter anderem auf den adhäsiven Eigenschaften der jeweiligen Klebemasse.

Als Adhäsion wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften der Klebemasse an der Substratoberfläche und ist als Anfassklebrigkeit (dem so genannten "Tack") oder als Klebkraft bestimmbar. Um die Adhäsion einer Klebemasse gezielt zu beeinflussen, werden der Klebemasse häufig Weichmacher und/oder klebkraftsteigernde Harze (so genannte "Tackifier") zugesetzt.

Als Kohäsion bezeichnet man üblicherweise den physikalischen Effekt, der den inneren Zusammenhalt eines Stoffs oder Stoffgemisches aufgrund intermolekularer und/oder intramolekularer Wechselwirkungen zur Folge hat. Die Kohäsionskräfte bestimmen somit die Zähflüssigkeit und Fließfähigkeit der Klebemasse, die sich etwa als Viskosität und als Scherstandzeit bestimmen lassen. Um die Kohäsion einer Klebemasse gezielt zu erhöhen, werden diese häufig einer zusätzlichen Vernetzung unterzogen, wofür der Klebemasse reaktive (und somit vernetzbare) Bestandteile oder andere chemische Vernetzer zugesetzt werden und/oder die Klebemasse in einer Nachbehandlung aktinischer (energiereicher) Strahlung ausgesetzt wird, beispielsweise ultraviolettem Licht oder Elektronenstrahlen.

Die klebtechnischen Eigenschaften einer Haftklebemasse werden in erster Linie von dem Verhältnis adhäsiver und kohäsiver Eigenschaften bestimmt. So ist es beispielsweise für einige Anwendungen wichtig, dass die eingesetzten Klebemassen hochkohäsiv sind, also über einen besonders starken inneren Zusammenhalt verfügen, während für andere Anwendungen eine besonders hohe Adhäsion erforderlich ist. Haftklebemassen können zusätzlich mit chemischen oder physikalischen Härtungs- bzw. Vernetzungsmechanismen ausgestattet sein.

Als hochkohäsive Haftklebemasse gilt jede Haftklebemasse, die bereits ohne Nachvernetzung - also im unvernetzten Zustand - eine hohe Viskosität aufweist. Als hohe Viskosität wird insbesondere eine komplexe Viskosität von mehr als 200 Pa*s oder ganz besonders von mehr als 1.000 Pa*s angesehen, im strengen Sinne sogar nur eine Viskosität von mehr als 10.000 Pa*s (jeweils bestimmt mit einem Rotationsviskosimeter bei 10 rad/s und 110 °C). Dies schließt selbstverständlich nicht aus, dass eine solche hochviskose Klebemasse nach dem Auftragen auf ein Substrat oder einen Träger zusätzlich einer abschließenden Nachvernetzungsreaktion unterzogen wird, um die von Anfang an bereits hohe Viskosität weiter zu steigern.

Als wärmeleitende Haftklebemasse im Sinne der vorliegenden Erfindung wird jede beliebige geeignete Haftklebemasse verstanden, die eine hohe Wärmeleitfähigkeit aufweist. Die Wärmeleitfähigkeit eines Stoffes wird durch die Geschwindigkeit bestimmt, mit der sich eine lokale Erwärmung des Stoffes durch den Stoff hindurch ausbreitet, und entspricht somit dem Vermögen des Stoffes, thermische Energie mittels Wärmeleitung in Form von Wärme zu transportieren. Die Wärmeleitfähigkeit wird üblicherweise als temperaturabhängige Materialkonstante quantifiziert, nämlich als (spezifische) Wärmeleitfähigkeit oder Wärmeleitzahl, der das Formelzeichen λ (Lambda), I, k oder K (Kappa) und die Einheit W/(K·m) zugeordnet ist. Als hohe Wärmeleitfähigkeit wird insbesondere eine Wärmeleitfähigkeit angesehen, die höher ist als die Wärmeleitfähigkeit der in der Energietechnik häufig als Wärmeträger (Wärmetransportmittel) eingesetzten Wasser/Ethylenglykol-Gemische (60/40), die also bei 25 °C größer ist als 0,44 W/mK.

Ferner sollte diese Zusammensetzung während einer Anwendung als Haftklebemasse zeitlich konstante Eigenschaften aufweisen und daher unter den konkreten Anwendungsbedingungen inert sein (insbesondere in dem Temperaturbereich der Anwendung), so dass in der Zusammensetzung keine unbeabsichtigten chemischen Zersetzungsprozesse in nennenswerten Umfang ablaufen. Dies schließt jedoch nicht aus, dass in einer Haftklebemasse ein allmählicher Langzeitabbau der Zusammensetzung infolge üblichen Gebrauchs auftreten kann, wie er etwa auch bei den bekannten fluiden Wärmetransportsystemen eintritt. Darüber hinaus kann in einer erfindungsgemäßen Haftklebemasse auch eine gezielte chemische Veränderung, etwa ein zur Kohäsionssteigerung durchgeführtes Nachvernetzen nach dem Auftragen der Haftklebemasse auf die Oberfläche eines Trägers, der Wärmequelle oder der Wärmesenke, sowie ein beabsichtigter Phasenübergang innerhalb der Haftklebemasse zum Erzielen einer latenten Wärmespeicherung auftreten.

Erfindungsgemäß umfasst die hochkohäsive wärmeleitende Haftklebemasse zumindest Aluminiumoxidpartikel als wärmeleitenden Hilfsstoff sowie eine Polymermasse. Sofern die Polymermasse ein hochmolekulares Basispolymer auf Acrylatbasis enthält, sind als Polymermassen ausnahmslos alle geeigneten und dem Fachmann bekannten Polymere sowie Mischungen dieser Polymere untereinander und/oder mit weiteren Hilfsstoffen einsetzbar, die in dem jeweiligen Anwendungsbereich chemisch beständig sind. Dazu gehören sowohl niedermolekulare polymere Wachse und Harze als auch hochmolekulare Polymermassen und technische Polymere. Unter diesen seien beispielsweise Polymere auf der Grundlage von Naturkautschuken, Synthesekautschuken und/oder Silikonen genannt, insbesondere Polymere auf der Basis von Acrylaten und/oder Methacrylaten.

Zur Vermeidung von Blasen beim schichtförmigen Auftragen oder im Verlauf einer späteren Anwendung muss diese Polymermasse zumindest im Wesentlichen lösemittelfrei sein. Unter einer zumindest im Wesentlichen lösemittelfreien Polymermasse wird eine Polymermasse verstanden, die einen Gehalt an niedermolekularen Lösemitteln (VOC) von weniger als 0,5 Gew.-% aufweist, oder sogar von weniger als 0,1 Gew.-%. Eine zumindest im Wesentlichen lösemittelfreie Polymermasse sollte darüber hinaus während des gesamten Verlaufs des Abmischens und Auftragens einen Lösemittelgehalt von maximal 5 Gew.-% besitzen. Ein noch geringerer Gehalt zeigt im Hinblick auf eine blasenfreie Verwendung noch bessere Ergebnisse, ist jedoch in der Praxis häufig nicht zu realisieren, da viele Polymere, insbesondere einige Acrylate, ausschließlich in Lösung hergestellt werden können und somit technisch nicht vollständig lösemittelfrei eingesetzt werden können, sondern lediglich als im Wesentlichen lösemittelfreie Polymere.

Im Hinblick auf das Vermeiden von Blasen ist es dabei ganz besonders von Vorteil, wenn nicht bloß lediglich die Polymermasse zumindest im Wesentlichen lösemittelfrei ausgebildet ist, sondern wenn zudem die hochkohäsive wärmeleitende Haftklebemasse insgesamt einen allenfalls äußerst geringen Gehalt an Lösemitteln (leichtflüchtigen organischen Verbindungen, Wasser und dergleichen) aufweist, insbesondere von weniger als 0,05 Gew.-% oder sogar von weniger als 0,01 Gew.-%, bezogen auf das Gesamtgewicht der Haftklebemasse, wobei eine derartige zumindest im Wesentlichen lösemittelfreie Haftklebemasse mit Aluminiumoxidpartikeln bei Anwendung der erfindungsgemäßen Lehre erhältlich ist.

Die Polymermasse enthält ein hochmolekulares Basispolymer auf Acrylatbasis. Als Basispolymer einer Polymermischung wird ein Polymer bezeichnet, dessen Eigenschaften einzelne oder sogar alle Eigenschaften der gesamten Polymermischung dominieren, wobei selbstverständlich nicht ausgeschlossen ist, dass die Eigenschaften der Polymermasse durch Verwendung von modifizierenden Hilfs- oder Zusatzstoffen oder von weiteren Polymeren in der Zusammensetzung zusätzlich mitbeeinflusst werden. Insbesondere kann dies bedeuten, dass der Anteil des Basispolymers an der Gesamtmasse der polymeren Phase mehr als 50 Gew.-% beträgt. Enthält die Polymermasse nur ein einziges Polymer, so ist dieses Polymer natürlich das Basispolymer.

Erfindungsgemäß muss das Basispolymer selber hochmolekular sein, das heißt eine Molekularmasse (Molmasse) von mehr als 100.000 g/mol aufweisen (entsprechend einer mittleren Molekülmasse von mindestens 100 kD). Vorzugsweise weist das Basispolymer eine Molekularmasse von mindestens 500.000 g/mol auf, bevorzugt von mehr als 1.000.000 g/mol. Als im Zusammenhang mit diesen Polymeren verwendete Molekularmasse wird vorliegend das Gewichtsmittel M_{w} der Molekularmasse verstanden.

Das Basispolymer ist hierbei ein Polymer auf Acrylatbasis. Dies bedeutet, dass das Basispolymer der Polymermasse zu mehr als 50 % aus Monomereinheiten aufgebaut ist (bezogen auf die Anzahl der in dem Basispolymer enthaltenen Monomereinheiten), deren chemische Struktur sich von der Struktur von Acrylsäure herleiten lässt, also etwa Acrylsäure, Methacrylsäure oder deren substituierte oder unsubstituierte Derivate. Vorteilhafterweise ist nicht nur das Basispolymer der Polymermasse sondern die gesamte Polymermasse selbst zum überwiegenden Teil - also zu 50 Gew.-% oder mehr - aus Monomereinheiten aufgebaut, die sich von Acrylsäure ableiten, also aus Acrylaten, Methacrylaten, deren Estern und Derivaten von diesen.

Im Sinne dieser Erfindung lassen sich also Polymere auf der Basis von Acrylsäure und/oder Methacrylsäure einsetzen, beispielsweise solche auf der Basis von Acrylsäureestern, Methacrylsäureestern und/oder Derivaten davon, da diese besonders alterungsstabil sind und somit wiederholten Wärmetransportprozessen langzeitig standzuhalten vermögen. Es sind insbesondere auf Acrylaten basierende Polymere geeignet, die etwa durch radikalische Polymerisation erhältlich sind und die zumindest teilweise auf mindestens einem Acrylmonomer der allgemeinen Formel CH₂=C(R¹)(COOR²) basieren, wobei R¹ H oder ein CH₃-Rest ist und R² aus der Gruppe der gesättigten, unverzweigten oder verzweigten, substituierten oder unsubstituierten C₁- bis C₃₀-Alkylreste gewählt ist (vorteilhafterweise der C₂- bis C₂₀-Alkylreste, der C₄- bis C₁₄-Alkylreste oder sogar der C₄- bis C₉-Alkylreste), gegebenenfalls aber auch H darstellen kann.

Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigte Isomere, beispielsweise Isobutylacrylat, 2-Ethylhexylacrylat, 2-Ethylhexylmethacrylat, Isooctylacrylat, Isooctylmethacrylat, Cyclohexylmethacrylat, Isobornylacrylat, Isobornylmethacrylat und 3,5-Dimethyladamantylacrylat.

Ferner kann das Basispolymer Monomereinheiten mit freien Säuregruppen und/oder freien Hydroxygruppen enthalten, da sich mit diesen eine besonders hohe Kohäsion realisieren lässt. Als freie Säuregruppen kommen alle Gruppen in Frage, die als LewisSäuren wirken. Dies beinhaltet auch solche Gruppen, die selber Brönsted-Säuren darstellen, aus denen also Protonen abgespalten werden können. Dies können zum Beispiel Carboxylgruppen (-COOH), Sulfonsäuregruppen (-SO₃H) Phosphonatgruppen (-PO₃HR, wobei R H oder ein organischer Rest ist), Phosphorsäureestergruppen (-OPO₃HR, wobei R H oder ein organischer Rest ist) Schwefelsäureestergruppen (-OSO₃H), Borsäureestergruppen (-OBO₃HR, wobei R H oder ein organischer Rest ist), Kohlensäureestergruppen (-OCO₂H) oder die entsprechenden Thioverbindungen der vorstehenden Gruppen sein. Exemplarisch für derartige Monomere seien etwa Acrylsäure, Methacrylsäure sowie Hydroxyethylmethacrylate genannt, ohne sich durch die beispielhafte Aufzählung einzuschränken.

Diese Polymere können zusätzlich zu dem mindestens einen Typ Acrylmonomer weitere Comonomere enthalten, die vorteilhafterweise mit dem mindestens einen Acrylmonomer polymerisierbar sind, etwa Vinylverbindungen mit funktionellen Gruppen, Maleinsäureanhydrid, Styrol, Styrol-Verbindungen, Vinylacetat, Acrylamide, mit Doppelbindung funktionalisierte Photoinitiatoren und dergleichen.

Erfindungsgemäß dient die Polymermasse als Matrix für Aluminiumoxidpartikel, die als wärmeleitender Hilfsstoff eingesetzt werden. Als Hilfsstoff (Zusatzstoff, Additiv) wird grundsätzlich jede Substanz verstanden, die den Polymerbestandteilen (der polymeren Phase, Polymermatrix) der Haftklebemasse hinzugefügt wird, um die Eigenschaften und Funktionalität der Haftklebemasse gezielt zu beeinflussen. Als wärmeleitender Hilfsstoff gilt jeder Hilfsstoff, der selber eine hohe Wärmeleitfähigkeit aufweist und, in eine Polymermatrix eingebracht, die Wärmeleitfähigkeit der Mischung insgesamt vergrößert.

Der Masseanteil der Aluminiumoxidpartikel in der Haftklebemasse kann dabei vorteilhafterweise mindestens 20 Gew.-% und höchstens 90 Gew.-% betragen, insbesondere mindestens 40 Gew.-% und höchstens 80 Gew.-%.

Als wärmeleitende Hilfsstoffe sind generell alle partikulären Aluminiumoxide (Al₂O₃) einsetzbar, die mit dem Polymer vermischbar sind. Erfindungswesentlich ist dabei, dass der Anteil an alpha-Aluminiumoxid in den Aluminiumoxidpartikeln mehr als 95 Gew.-% oder sogar mehr als 97 Gew.-% beträgt. Demzufolge muss der Anteil an anderen Aluminiumoxid-Modifikationen (also etwa an gamma-Aluminiumoxid oder an amorphem Aluminiumoxid, gegebenenfalls auch - ohne chemisch ein Aluminiumoxid zu sein - an beta-Aluminiumoxid) also weniger als 5 Gew.-% betragen bzw. sogar weniger als 3 Gew.-%.

Entsprechend der vorliegenden Erfindung liegt das Aluminiumoxid in Form von Partikeln vor. Als Partikel wird vorliegend jede Materialansammlung verstanden, die aus einzelnen voneinander abgegrenzten Volumenkörpern besteht, deren äußere Abmessungen sehr klein sind, also beispielsweise Pulver, Stäube einschließlich Feinstäube, Kolloide einschließlich Sole, Aerosole und dergleichen. Für die Definition eines Partikels kommt es dabei grundsätzlich nicht darauf an, dass dieses einen bestimmten inneren Aufbau, eine bestimmte Kristallinität, einen bestimmten Formfaktor oder eine besondere - regelmäßige oder unregelmäßige - äußere Form aufweist. Jedoch ist es erfindungsgemäß erforderlich, dass insgesamt mehr als 95 Gew.-% der Aluminiumoxidpartikel aus alpha-Aluminiumoxid bestehen.

Im Hinblick auf eine Eingrenzung der äußeren Abmessungen dieser Partikel kann es dabei sinnvoll sein, wenn lediglich solche Partikel zum Einsatz kommen, die einen mittleren Durchmesser aus einem Bereich von 2 µm bis 500 µm aufweisen, insbesondere aus einem Bereich von 2 µm bis 200 µm oder sogar aus einem Bereich von 40 µm bis 150 µm. Als mittlerer Durchmesser wird ein über eine Partikelgrößenverteilung als Massenmittel oder Zahlenmittel gemittelter Partikeldurchmesser verstanden, wobei dieser Partikeldurchmesser im Falle von lediglich einer einzigen Partikelgröße (d.h. einer monodispersen Substanz) auch mit der einen einzigen Partikelgröße identisch sein kann. Anstelle dessen kann der mittlere Partikeldurchmesser auch als D50-Wert bestimmt werden, also als derjenige Partikeldurchmesser, oberhalb und unterhalb dessen jeweils 50 Gew.-% der Partikel innerhalb der Größenverteilung vorliegen. Als Partikeldurchmesser wird hier der über ein Partikel gemittelte mittlere Durchmesser verwendet, der bei unregelmäßig geformten Partikeln zwischen dem maximalen Durchmesser und dem minimalen Durchmesser der Partikel liegt.

Partikelgrößen sowie deren Verteilungen lassen sich unter Verwendung aller hierfür üblichen Verfahren ermitteln, etwa mit Hilfe einer Bildanalyse mikroskopischer Abbildungen (beispielsweise Abbildungen, die aus der optischen Mikroskopie einschließlich Ultramikroskopie, aus der Elektronenmikroskopie oder der Rasterkraftmikroskopie erhalten werden), aus der Beugung oder Streuung elektromagnetischer Strahlung (etwa Laserbeugung bzw. -streuung oder Röntgenbeugung/-streuung, einschließlich Kleinwinkelstreuung), aus Sedimentationsmessungen, etwa mittels einer Ultrazentrifuge und dergleichen.

Die Aluminiumoxidpartikel können beliebig ausgebildet sein, etwa als kompakte Partikel oder porös. Für eine besonders gute thermische Leitfähigkeit kann es jedoch von Vorteil sein, wenn die Partikel eine massebezogene spezifische Oberfläche von 1,3 m²/g oder weniger aufweisen, vorzugsweise sogar von weniger als 1,0 m²/g. Als spezifische Oberfläche der Partikel wird die Gesamtheit aller in dem Probenvolumen enthaltenen Oberflächen bezeichnet, wozu nicht bloß die äußere Begrenzung der Partikel (äußere Oberfläche oder geometrische Oberfläche, die also von außen sichtbar ist), sondern ebenfalls die Oberfläche innerhalb der Partikel zählt, also etwa die Begrenzungsflächen innerhalb von inneren Hohlräumen, Kanälen, Poren und dergleichen. Vorliegend benannt ist die massebezogene spezifische Oberfläche der Partikel, also die Oberfläche, die in einer Probenmenge einer Masse von 1 g vorliegt. Üblicherweise werden derartige spezifische Oberflächen mittels des Sorptionsverfahrens (BET-Bestimmung) bestimmt, in denen die Adsorption und Desorption eines Sondengases (in der Regel von Stickstoff, Helium oder Quecksilber) an der zugänglichen Oberfläche der Probe untersucht wird.

Darüber hinaus kann es sinnvoll sein, Partikel einzusetzen, die ihrerseits aus Primärteilchen aufgebaut sind. Ein Primärteilchen ist ein Teilchen sehr kleinen Durchmessers, das beispielsweise nahezu durchgängig kristallin (Kristallit) oder amorph ist, aus dem wiederum größere Strukturen aufgebaut sind, im vorliegenden Fall die Partikel. Die Partikel können dabei polykristallin sein (etwa, wenn die Primärteilchen als einzelne Kristalldomänen eine unterschiedliche räumliche Ausrichtung aufweisen) oder aber eine übergeordnete Kristallstruktur besitzen.

Aus Primärteilchen aufgebaute Partikel können als beliebige räumliche Häufung von vielen dicht aneinander gedrängten und äußerlich verbundenen kleineren Individuen vorliegen, beispielsweise als nicht verwachsener Verband von an Ecken und Kanten aneinander gelagerten Primärteilchen, deren Gesamtoberfläche nahezu identisch mit der Summe der Einzeloberflächen ist, oder als verwachsener Verband von flächig über Seitenflächenbereiche aneinander gelagerten Primärteilchen, deren Oberfläche kleiner ist als die Summe der Oberflächen der Primärteilchen, also etwa als Agglomerate, Aggregate, Assoziate, Koazervate, Flokkulate, Konglomerate und dergleichen.

Dabei können diese Primärteilchen optional mittlere Durchmesser von mindestens 1 µm aufweisen, insbesondere von mindestens 2 µm. Entsprechend dem Partikeldurchmesser wird als mittlerer Durchmesser ein über eine Primärteilchengrößenverteilung als Massenmittel oder Zahlenmittel gemittelter Primärteilchendurchmesser verstanden. Der Primärteilchendurchmesser ist der über einzelne Primärteilchen gemittelte mittlere Durchmesser, der etwa bei unregelmäßig geformten Primärteilchen zwischen dem maximalen Durchmesser und dem minimalen Durchmesser der Primärteilchen liegt.

Wenn die Primärteilchen die zuvor beschriebene Größe aufweisen, so ergeben sich beim Aneinanderlagern der Primärteilchen Hohlraumstrukturen (Poren) zwischen den Primärteilchen. Diese sind sehr groß, so dass die Polymermatrix zumindest teilweise in die Partikel eindringen kann, indem sie einen Teil des Raumes zwischen zwei benachbarten Primärpartikeln ausfüllt. Eine vollständige Bedeckung der im Innern der Partikel vorhandenen Oberfläche ist jedoch selbst unter diesen Umständen nicht zu erwarten, da insbesondere bei kleinen Porendurchmessern der Kapillardruck innerhalb dieser Poren sehr groß sein kann, so dass innerhalb der Partikel auch nicht von der Polymermasse bedeckte und somit freiliegende Abschnitte der Partikeloberfäche vorliegen können.

Eine wärmeleitende Haftklebemasse kann darüber hinaus selbstverständlich auch weitere Rezeptierungsbestandteile und/oder Zuschlagsstoffe umfassen wie zum Beispiel Hilfsstoffe, Pigmente, rheologische Additive, Additive zur Verbesserung der Haftung, Weichmacher (Plastifizierungsmittel), Harze, Elastomere, Alterungsschutzmittel (Antioxidantien), Lichtschutzmittel, UV-Absorber sowie sonstige Hilfs- und Zusatzstoffe, beispielsweise Trockenmittel (etwa Molekularsieb-Zeolithe oder Calciumoxid), Fließ- und Verlaufmittel, Benetzer wie Tenside oder Katalysatoren, weitere wärmeleitende Füllstoffe sowie wärmespeichernde Füllstoffe.

Als Hilfsstoffe können alle fein gemahlenen festen Zusatzstoffe eingesetzt werden, zum Beispiel Kreide, Magnesiumcarbonat, Zinkcarbonat, Kaolin, Bariumsulfat, Titandioxid oder Calciumoxid. Weitere Beispiele sind Talkum, Glimmer, Kieselsäure, Silikate oder Zinkoxid. Natürlich können auch Mischungen der genannten Stoffe verwendet werden.

Die eingesetzten Pigmente können organischer oder anorganischer Natur sein. Es kommen alle Arten organischer oder anorganischer Farbpigmente in Frage, beispielsweise Weißpigmente wie Titandioxid (zur Verbesserung der Licht- und UV-Stabilität) oder Metallpigmente. Bei einer Verwendung von Metallpigmenten oder anderen metallischen Hilfsstoffen oder Trägermaterialien ist allerdings darauf zu achten, dass diese metallischen Bestandteile bei einem Einsatz in einem insgesamt elektrisch isolierenden wärmeleitenden Flächenelement mit hoher elektrischer Durchschlagfestigkeit nicht durchgängig über die gesamte Dicke des Flächenelements vorgesehen sein dürfen, vielmehr muss das Flächenelement zumindest in einem schichtförmigen Teilbereich elektrisch vollständig isolierend ausgebildet sein.

Beispiele für rheologische Additive sind pyrogene Kieselsäuren, Schichtsilikate (beispielsweise Bentonite), hochmolekulare Polyamidpulver oder Pulver auf der Basis von Rhizinusölderivaten.

Additive zur Verbesserung der Haftung können zum Beispiel Stoffe aus den Gruppen der Polyamide, Epoxide oder Silane sein. Die hierbei erzielbare Verbesserung der Haftung betrifft sowohl die Haftung der Haftklebemasse an einem Verklebungssubstrat oder Träger wie auch die innere Haftung der Polymermatrix an den Aluminiumoxidpartikeln.

Beispiele für Weichmacher zur Verbesserung der Klebfähigkeit sind Phthalsäureester, Trimellitsäureester, Phosphorsäureester, Adipinsäureester sowie Ester anderer acyclischer Dicarbonsäuren, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitrilkautschuke oder Polyisoprenkautschuke), flüssige oder halbfeste Polymerisate aus Buten und/oder Isobuten, Acrylsäureester, Polyvinylether, Flüssig- und Weichharze auf der Basis der Rohstoffe, die auch die Basis für klebrigmachende Harze darstellen, Wollwachs und andere Wachse, Silikone sowie Polymerweichmacher wie etwa Polyester oder Polyurethane.

Die Rezeptierung der hochkohäsiven wärmeleitenden Haftklebemasse mit den weiteren Bestandteilen wie zum Beispiel Hilfsstoffen und Weichmachern, gehört ebenfalls zum Stand der Technik.

Zur Optimierung der klebtechnischen Eigenschaften können den erfindungsgemäßen Haftklebemassen Harze beigemischt werden. Als zuzusetzende klebrigmachende Harze (die Klebkraft steigernde Harze) sind ausnahmslos alle vorbekannten und in der Literatur beschriebenen Klebharze einsetzbar. Genannt seien stellvertretend die Pinenharze, Indenharze und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C₅- bis C₉- sowie andere Kohlenwasserstoffharze. Beliebige Kombinationen dieser und weiterer Harze können eingesetzt werden, um die Eigenschaften der resultierenden Haftklebemasse wunschgemäß einzustellen. Im Allgemeinen lassen sich alle mit dem entsprechenden Basispolymer kompatiblen (löslichen) Harze einsetzen, insbesondere sei verwiesen auf alle aliphatischen, aromatischen, alkylaromatischen Kohlenwasserstoffharze, Kohlenwasserstoffharze auf der Basis reiner Monomere, hydrierte Kohlenwasserstoffharze, funktionelle Kohlenwasserstoffharze sowie Naturharze.

Eine weitere vorteilhafte Ausgestaltung des Flächenelements kann durch Zugabe von einem wärmespeichernden Füllstoff zu zumindest einer der Schichten erreicht werden. Als wärmespeichernder Füllstoff wird vorliegend jeder Füllstoff mit einer hohen Wärmekapazität verstanden, insbesondere mit einer Wärmekapazität von mehr als 0,7 J/gK. Infolge der thermischen Pufferwirkung solcher Substanzen kann auf diese Weise ein gleichmäßiger Wärmetransport erzielt werden. Füllstoffe mit hoher Wärmekapazität, die in vorteilhafter Weise eingesetzt werden können, sind etwa Aluminium, Bor, Calcium, Eisen, Graphit, Kupfer, Magnesium oder Verbindungen der vorgenannten Stoffe, insbesondere Aluminiumchlorid, Calciumcarbonat, Calciumchlorid, Kupfersulfat, Magnetit, Haematit, Magnesiumcarbonat und Magnesiumchlorid.

Bevorzugt wird als wärmespeichernder Füllstoff ein Phasenübergangsmaterial eingesetzt (so genanntes "Phase Change Material"). Mit Hilfe dieser Materialien ist es möglich, kurzfristige Spitzen im Wärmestrom abzupuffern. Als derartige Latentwärmespeicher können alle dem Fachmann bekannten Phasenübergangsmaterialien eingesetzt werden, beispielsweise niedrigschmelzende Salze oder Paraffinwachse.

Die erfindungsgemäßen Haftklebemassen lassen sich hervorragend zur Herstellung eines wärmeleitenden Flächenelements einsetzen. Als Flächenelement im Sinne dieser Anmeldung gelten insbesondere alle üblichen und geeigneten Gebilde mit im Wesentlichen flächenförmiger Ausdehnung. Diese können verschieden ausgestaltet sein, insbesondere flexibel, als Folie, Band, Etikett oder als Formstanzling. Die so erhaltenen Flächenelemente können beliebig beschaffen sein, also etwa einen permanenten Träger aufweisen oder auch trägerfrei ausgebildet sein.

Zur Herstellung der erfindungsgemäßen Haftklebemasse sind ohne Ausnahme alle bekannten und geeigneten Verfahren einsetzbar, die vorzugsweise nicht in Gegenwart von Lösemitteln durchgeführt werden. So lässt sich beispielsweise das zumindest eine Polymer mit dem Füllstoff oder den Füllstoffen in einem üblichen Mischaggregat als Feststoff oder in der Schmelze vermischen, etwa in einem Kneter oder Doppelschneckenextruder.

Auch zur Herstellung der erfindungsgemäßen Flächenelemente sind ohne Ausnahme alle bekannten und geeigneten Verfahren einsetzbar. So lassen sich flächenförmige Anordnungen der wärmeleitenden Haftklebemasse des erfindungsgemäßen Flächenelements mit den geläufigen Verfahren zur Herstellung polymerer Flächenelemente nach dem Stand der Technik herstellen. Dazu zählen etwa die Flachfolienextrusion, die Blasfolienextrusion, das Kalanderverfahren, die Beschichtung aus der Schmelze oder aus einer monomeren oder präpolymeren Vorstufe des Polymeren.

Ein Verfahren zur Herstellung einer hochkohäsiven wärmeleitenden Haftklebemasse enthält somit beispielsweise die folgenden drei Schritte, nämlich den ersten Schritt, bei dem eine zumindest im Wesentlichen lösemittelfreie Polymermasse enthaltend ein hochmolekulares Basispolymer auf Acrylatbasis ohne Lösemittelzugabe thermisch erweicht wird, den zweiten Schritt, bei dem der erweichten Polymermasse Aluminiumoxidpartikel mit einem Anteil an alpha-Aluminiumoxid von mehr als 95 Gew.-% hinzugegeben werden, und den dritten Schritt, bei dem die erweichte Polymermasse und die Aluminiumoxidpartikel miteinander mechanisch vermengt werden, wobei alle drei Schritte ohne Verwendung von Lösemitteln durchgeführt werden. Auf diese Weise ist es möglich, eine hochkohäsive Haftklebemasse erhalten, die einen besonders geringen Gehalt an Lösemitteln aufweist.

Zur Herstellung der Flächenelemente kann zum Beispiel die hochkohäsive wärmeleitende Haftklebemasse zunächst schichtförmig ausgebreitet werden, etwa auf einem permanenten Träger oder auf einem temporären Fertigungsträger (einem so genannten "Prozessliner"), der während des Verfahrens oder spätestens am Ende des Verfahrens von dem Flächenelement wieder getrennt wird. Wird ein permanenter Träger eingesetzt, so ist es vorteilhaft, wenn auch dieser eine hohe Wärmeleitfähigkeit besitzt, etwa, indem dieser ebenfalls wärmeleitende Füllstoffe enthält. Alternativ oder zusätzlich kann das Flächenelement als wärmeleitenden Träger, mittels dessen ein schneller Wärmetransport ebenfalls über die gesamte Fläche des Flächenelements realisiert wird, auch ein flächenförmiges metallisches Gebilde enthalten, beispielsweise eine Folie, ein Gitter, ein Vlies, ein Gewebe oder ein Streckmetall. Derartig aufgebaute Flächenelemente werden erfindungsgemäß zum Verbinden von Wärmequellen und Wärmesenken eingesetzt, insbesondere innerhalb von elektronischen Geräten.

Weitere Vorteile und Anwendungsmöglichkeiten gehen aus den Ausführungsbeispielen hervor, die im Folgenden näher beschrieben werden sollen. Hierzu wurden unterschiedliche Haftklebemassen hergestellt, die sich im Hinblick auf die beigefügten Aluminiumoxidpartikel unterschieden. Neben einem unterschiedlichen Gehalt an Aluminiumoxid in der alpha-Modifikation wichen die Haftklebemassen auch in Bezug auf die Geometrie der eingesetzten Teilchen voneinander ab, etwa hinsichtlich ihrer mittleren Teilchengrößen. Die Polymermassen der Haftklebemassen waren entweder Alkylacrylate (Typ A), deren eine Komponente Hydroxygruppen aufwies, oder unsubstituierte Alkylacrylatmassen (Typ B).

Die Eigenschaften dieser exemplarisch hergestellten hochkohäsiven wärmeleitenden Haftklebemassen wurden nach den folgenden Verfahren untersucht:

Zur Bestimmung der spezifischen Oberfläche unterschiedlicher Aluminiumoxidpartikel wurde eine Variante des BET-Verfahrens durchgeführt, innerhalb dessen die Adsorption von Stickstoff an einer Probe nach ISO 8008 bestimmt wurde.

Zur Ermittlung der mittleren Partikelgröße der Aluminiumoxide wurde eine statische Laserlichtbeugung an mit Hilfe von Ultraschall in Wasser dispergierten Proben durchgeführt (Gerät: Malvern Instruments Mastersizer 2000), wobei die Auswertung nach dem Fraunhofer-Modell erfolgte.

Zur Bestimmung der Wärmeleitfähigkeit der Haftklebemassen mit den Aluminiumoxidpartikeln wurde ein Verfahren nach ISO-Entwurf 22007-2 durchgeführt (Dicke der Prüfkörper: 10 mm auf beiden Seiten des flächigen Heizelements).

Die Bestimmung der elektrischen Durchschlagfestigkeit der mit den Haftklebemassen erhaltenen haftklebenden Flächenelementen erfolgte nach VDE 0100.

Die Bestimmung der Klebkraft haftklebriger Flächenelemente mit Haftklebemassen von 200 µm Massendicke erfolgte in einem Schälversuch unter einem Winkel von 90 ° bei einer Abzugsgeschwindigkeit von 300 mm/min nach PSTC 1 (entsprechend ASTM D 3330-04 / ISO 29862:2007). Alle Messungen wurden bei Raumtemperatur (23 °C) unter klimatisierten Bedingungen (bei 50 % relativer Luftfeuchtigkeit) durchgeführt. Der Schälversuch wurde exemplarisch mit einer einzigen Probe durchgeführt, wobei die Bestimmung der Klebkraft nach einer Verklebungszeit/Alterungsdauer von zwei Wochen erfolgte.

Die Haftklebemassen wurden jeweils aus einer Acrylat-Polymermasse und Aluminiumoxidpartikeln hergestellt. Ein Teil der Haftklebemassen enthielt dabei eine Polymermasse, die unter anderem Acrylsäure und Hydroxyethylmethacrylat als Copolymere enthielt (hier als "Typ A" bezeichnet), während die restlichen Haftklebemassen kein Hydroxyethylmethacrylat enthielten (hier als "Typ B" bezeichnet). Als Haftklebemasse vom Typ A wurde eine Haftklebemasse mit einer Acrylat-Polymermasse verwendet, die als Comonomere 45 Gew.-% Ethylhexylacrylat, 45 Gew.-% Butylacrylat, 8 Gew.-% Methylacrylat, 1 Gew.-% Hydroxyethylmethacrylat sowie 1 Gew.-% Acrylsäure enthielt. Als Haftklebemasse vom Typ B wurde eine Haftklebemasse mit einer Acrylat-Polymermasse verwendet, deren Bestandteile Alkylacrylate waren, die nicht zusätzlich mit Hydroxygruppen substituiert waren ("unsubstituierte Alkylacrylate", die kein Hydroxyethylmethacrylat enthielten). Diese Polymermasse enthielt als Comonomere 45 Gew.-% Ethylhexylacrylat, 45 Gew.-% Butylacrylat, 5 Gew.-% Methylacrylat sowie 5 Gew.-% Acrylsäure.

Aluminiumoxidpartikel wurden von verschiedenen Herstellern eingesetzt, um zu gewährleisten, dass die Messergebnisse von dem jeweiligen Herstellungsverfahren der Partikel unabhängig sind.

Zur Herstellung der Acrylat-Polymermasse wurden die einzelnen Comonomere in dem Fachmann bekannter Weise in einem Gemisch aus Benzin und Aceton als Lösemittel polymerisiert. Das Lösemittel wurde anschließend mittels eines Entgasungsextruders aus der entstandenen Acrylat-Polymermasse sorgfältig entfernt, so dass der Gesamtgehalt an Lösemittel weniger als 1 Gew.-% betrug.

Zur Herstellung einer hochkohäsiven wärmeleitenden Haftklebemasse wurde die zuvor erhaltene Acrylat- Polymermasse aufgeschmolzen und die jeweiligen Aluminiumoxidpartikel in einem Laborkneter der Firma Haake bei einer Temperatur von 100 °C in die Schmelze eingearbeitet. Die Masse der Aluminiumoxidpartikel wurde jeweils so gewählt, dass 40 Vol.-% der abgemischten Haftklebemasse den Aluminiumoxidpartikeln zuzurechnen waren.

Zur Herstellung der wärmeleitenden haftklebrigen Flächenelemente wurde die zuvor erhaltene Haftklebemasse in einer Vakuumpresse bei einer Temperatur von 150 °C zu Filmen einer Dicke von 200 µm verpresst. Um die für die Messung der Wärmeleitfähigkeit erforderliche Probendicke von 10 mm zu realisieren wurden 50 dieser trägerfreien Flächenelemente übereinander laminiert.

Zur Verdeutlichung des durch Einsatz der erfinderischen Haftklebemasse erzielbaren Effekts ist lediglich beispielhaft eine Versuchsreihe für Haftklebemassen mit Aluminiumoxidpartikeln als wärmeleitendem Hilfsstoff wiedergegeben, die sich im Hinblick auf die konkrete Struktur und Morphologie der Aluminiumoxidpartikel unterscheiden. Es sei darauf hingewiesen, dass ähnliche Ergebnisse auch bei Verwendung anderer Polymere erhalten wurden.

**TABELLE 1**

| Probe Nr. | Typ des Polymers | α-Gehalt [Gew.-%] | BET [m²/g] | Partikelgröße D50 [µm] | Wärmeleitfähigkeit [W/mK] |
|---|---|---|---|---|---|
| Beispiele: | | | | | |
| 1 | A | 96 | 5 | 1.6 | 0,7 |
| 2 | A | 98 | 0,8 | 70 | 1,2 |
| 3 | A | 98 | 1 | 4,16 | 0,99 |
| 4 | A | 98 | 1 | 5,43 | 0,95 |
| 5 | A | 98 | 1,5 | 2,68 | 0,69 |
| 6 | A | 98 | 2 | 13,81 | 0,81 |
| 7 | A | 98 | 4,1 | 1,7 | 0,74 |
| 8 | A | 98 | 8 | 0,7 | 0,74 |
| 9 | B | 98 | 0,8 | 70 | 1,13 |

| Vergleichsbeispiele: | | | | | |
|---|---|---|---|---|---|
| 10 | A | 95 | 9 | 3 | (Vergelung) |
| 11 | B | 95 | 9 | 3 | (Vergelung) |
| 12 | A | > 70 | 10 | 3 | (Vergelung) |
| 13 | A | < 2 | 150 | 6 | (Vergelung) |

In dieser Tabelle sind neben der Probennummer zum Identifizieren der Proben (Proben 1 - 9 als erfindungsgemäße Beispiele und Proben 10 - 13 als Vergleichsbeispiele) der massebezogene Gehalt des Aluminiumoxids an alpha-Aluminiumoxid (α-Gehalt), die massenbezogene spezifische Oberfläche der Aluminiumoxidpartikel (BET), die mittlere Partikelgröße des Aluminiumoxids (als D50-Wert) sowie die Wärmeleitfähigkeit der resultierenden Haftklebemassen aufgeführt.

Die neun erfindungsgemäßen Haftklebemassen 1 - 9 besaßen Wärmeleitfähigkeiten aus einem Bereich von 0,7 W/mK bis 1,2 W/mK. Der Gehalt an alpha-Aluminiumoxid war bei allen erfindungsgemäßen Proben größer als 95 Gew.-%. Die Viskosität aller abgemischten Haftklebemassen waren hinreichend hoch, um als hochviskos angesehen zu werden; so wurde die Viskosität der Haftklebemasse 3 beispielsweise zu 14.000 Pa^{*}s bestimmt (10 rad/s; 110 °C). Die Proben konnten ferner alle problemlos im Kneter abgemischt und anschließend zu einem blasenfreien Klebefilm gepresst werden.

Ferner wurden vier nicht-erfindungsgemäße Vergleichsbeispiele hergestellt (Proben 10 - 13), deren Gehalt an alpha-Aluminiumoxid 95 Gew.-% oder weniger betrug. Im Gegensatz zu den erfindungsgemäßen Beispielen kam es hier bereits im Kneter zu einer starken Vergelung der Haftklebemassen. Die Proben konnten daher unter der Presse nicht mehr als wärmeleitende Flächenelemente ausgeformt werden, so dass an diesen Systemen keine Messungen der Wärmeleitfähigkeit durchführbar waren.

Beim Vergleich der Vergleichsbeispiele mit Polymeren mit Hydroxyethylmethacrylat als Comonomer (Typ A; Proben 10, 12 und 13) mit dem Vergleichsbeispiel mit Polymeren ohne Hydroxyethylmethacrylat als Comonomer (Typ B; Probe 11) ist erkennbar, dass das Problem einer Vergelung nicht nur bei Haftklebemassen mit Polymermassen mit Hydroxygruppen auftritt, sondern auch bei Klebemassen mit Acrylaten auftreten kann, die lediglich mit Säuregruppen aufweisen. Bei beiden Systemen konnte durch Anwendung der erfindungsgemäßen Lehre ein Verklumpen der Haftklebemassen während des Abmischens in Schmelze vermieden werden.

Die Experimente belegen somit die praktischen Vorteile, die sich aus einer Verwendung von Aluminiumoxid mit mehr als 95 Gew.-% alpha-Aluminiumoxid für Acrylat-basierende Haftklebemassen ergeben.

Ferner wurde die Bestimmung der Klebkraft auf unterschiedlichen Verklebungssubstraten für eine unvernetzte Haftklebemasse nach einer Verklebungsdauer von 14 Tagen durchgeführt, nämlich für Probe 3. Auf einem polaren Stahlsubstrat betrug die derart ermittelte Klebkraft 18,1 N/cm, auf einem Polyimidsubstrat 8,5 N/cm und auf einem unpolaren Polyethylensubstrat immerhin noch 0,75 N/cm. Die Ergebnisse der Klebkraftmessungen belegen, dass die exemplarisch ausgewählte Haftklebemasse ein hinreichend gutes haftklebriges Verhalten zeigt und somit zur Herstellung eines haftklebrigen wärmeleitenden Flächenelements geeignet ist.

Die Prüfung der elektrischen Durchschlagsfestigkeit nach VDE 0100 wurde ebenfalls von allen erfindungsgemäßen Proben bestanden. Hieraus ist ersichtlich, dass die erfindungsgemäßen Haftklebemassen elektrisch nicht leitend sind und daher auch dort eingesetzt werden können, wo eine elektrische Isolierung von thermisch leitend verbundenen Komponenten gefordert ist, etwa in elektronischen Geräten.

Die Versuche belegen somit die hervorragende Eignung der erfindungsgemäßen hochkohäsiven wärmeleitenden Haftklebemassen sowie der damit hergestellten wärmeleitenden Flächenelemente als wärmeübertragende Systeme.

## Patentansprüche

1. Hochkohäsive wärmeleitende Haftklebemasse mit einer Polymermasse und mit Aluminiumoxidpartikeln, wobei
die Polymermasse eine zumindest im Wesentlichen lösemittelfreie Polymermasse mit einem hochmolekularen Basispolymer auf Acrylatbasis ist,
wobei das Basispolymer eine mittlere Molekularmasse M_{w} von mindestens 500.000 g/mol aufweist,
**dadurch gekennzeichnet, dass**
die Aluminiumoxidpartikel zu einem Anteil von mehr als 95 Gew.-% aus alpha-Aluminiumoxid bestehen.

2. Hochkohäsive wärmeleitende Haftklebemasse nach Anspruch 1, **dadurch gekennzeichnet, dass** das Basispolymer Monomereinheiten mit freien Säuregruppen und/oder freien Hydroxygruppen enthält.

3. Hochkohäsive wärmeleitende Haftklebemasse nach Anspruch 1 oder 2, **dadurch gekennzeichnet, dass** die Polymermasse zu einem Anteil von mindestens 50 Gew.-% Monomereinheiten aus der Gruppe umfassend Acrylate, Methacrylate, deren Ester und Derivate von diesen enthält.

4. Hochkohäsive wärmeleitende Haftklebemasse nach einem der Ansprüche 1 bis 3, **dadurch gekennzeichnet, dass** die Polymermasse einen Lösemittelgehalt von weniger als 0,1 Gew.-% aufweist.

5. Hochkohäsive wärmeleitende Haftklebemasse nach einem der Ansprüche 1 bis 4, **dadurch gekennzeichnet, dass** das Basispolymer eine mittlere Molekularmasse M_{w} von mehr als 1.000.000 g/mol aufweist.

6. Hochkohäsive wärmeleitende Haftklebemasse nach einem der Ansprüche 1 bis 5, **dadurch gekennzeichnet, dass** die Aluminiumoxidpartikel zu einem Anteil von 97 Gew.-% oder mehr aus alpha-Aluminiumoxid bestehen.

7. Hochkohäsive wärmeleitende Haftklebemasse nach einem der Ansprüche 1 bis 6, **dadurch gekennzeichnet, dass** die Aluminiumoxidpartikel eine massebezogene spezifische Oberfläche von höchstens 1,3 m²/g aufweisen, bevorzugt von weniger als 1,0 m²/g.

8. Hochkohäsive wärmeleitende Haftklebemasse nach einem der Ansprüche 1 bis 7, **dadurch gekennzeichnet, dass** die Aluminiumoxidpartikel einen mittleren Durchmesser aus einem Bereich von 2 µm bis 500 µm aufweisen, insbesondere aus einem Bereich von 2 µm bis 200 µm, ganz besonders aus einem Bereich von 40 µm bis 150 µm.

9. Hochkohäsive wärmeleitende Haftklebemasse nach einem der Ansprüche 1 bis 8, **dadurch gekennzeichnet, dass** die Aluminiumoxidpartikel in der Haftklebemasse zu einem Anteil von mindestens 20 Gew.-% und höchstens 90 Gew.-% vorliegen, insbesondere zu mindestens 40 Gew.-% und höchstens 80 Gew.-%, jeweils bezogen auf die Gesamtmasse der Haftklebemasse.

10. Hochkohäsive wärmeleitende Haftklebemasse nach einem der Ansprüche 1 bis 9, erhältlich in einem Verfahren, bei dem
die zumindest im Wesentlichen lösemittelfreie Polymermasse ohne Lösemittelzugabe thermisch erweicht wird,
der erweichten Polymermasse die Aluminiumoxidpartikel hinzugegeben werden, und
die erweichte Polymermasse und die Aluminiumoxidpartikel miteinander mechanisch vermengt werden.

11. Verfahren zur Herstellung einer hochkohäsiven wärmeleitenden Haftklebemasse, bei dem
eine zumindest im Wesentlichen lösemittelfreie Polymermasse enthaltend ein hochmolekulares Basispolymer auf Acrylatbasis ohne Lösemittelzugabe thermisch erweicht wird, wobei das Basispolymer eine mittlere Molekularmasse M_{w} von mindestens 500.000 g/mol aufweist,
der erweichten Polymermasse Aluminiumoxidpartikel hinzugegeben werden, deren Anteil an alpha-Aluminiumoxid mehr als 95 Gew.-% beträgt, und
die erweichte Polymermasse und die Aluminiumoxidpartikel miteinander mechanisch vermengt werden.

12. Verwendung von Aluminiumoxidpartikeln, die zu einem Anteil von mehr als 95 Gew.-% aus alpha-Aluminiumoxid bestehen, in einer Haftklebemasse.

13. Verwendung einer hochkohäsiven wärmeleitenden Haftklebemasse nach einem der Ansprüche 1 bis 10 zur Herstellung eines wärmeleitenden Flächenelements.

14. Wärmeleitendes Flächenelement mit einer hochkohäsiven wärmeleitenden Haftklebemasse nach einem der Ansprüche 1 bis 10.

15. Verwendung einer hochkohäsiven wärmeleitenden Haftklebemasse nach einem der Ansprüche 1 bis 10 zum Wärmetransport innerhalb elektronischer Geräte.

## Claims

1. Highly cohesive, thermally conducting, pressure-sensitive adhesive with a polymer composition and with aluminium oxide particles, where
the polymer composition is an at least substantially solvent-free polymer composition with a high molecular mass, acrylate-based base polymer,
where the base polymer has an average molecular mass M_{w} of at least 500 000 g/mol,
**characterized in that**
the aluminium oxide particles are composed in a fraction of more than 95% by weight of alpha-aluminium oxide.

2. Highly cohesive, thermally conducting, pressure-sensitive adhesive according to Claim 1, **characterized in that** the base polymer comprises monomer units having free acid groups and/or free hydroxyl groups.

3. Highly cohesive, thermally conducting, pressure-sensitive adhesive according to Claim 1 or 2, **characterized in that** the polymer composition comprises in a fraction of at least 50% by weight monomer units from the group encompassing acrylates, methacrylates, their esters, and derivatives thereof.

4. Highly cohesive, thermally conducting, pressure-sensitive adhesive according to any of Claims 1 to 3, **characterized in that** the polymer composition has a solvent content of less than 0.1% by weight.

5. Highly cohesive, thermally conducting, pressure-sensitive adhesive according to any of Claims 1 to 4, **characterized in that** the base polymer has an average molecular mass M_{w} of more than 1 000 000 g/mol.

6. Highly cohesive, thermally conducting, pressure-sensitive adhesive according to any of Claims 1 to 5, **characterized in that** the aluminium oxide particles are composed, in a fraction of 97% by weight or more, of alpha-aluminium oxide.

7. Highly cohesive, thermally conducting, pressure-sensitive adhesive according to any of Claims 1 to 6, **characterized in that** the aluminium oxide particles have a mass-based specific surface area of not more than 1.3 m²/g, preferably of less than 1.0 m²/g.

8. Highly cohesive, thermally conducting, pressure-sensitive adhesive according to any of Claims 1 to 7, **characterized in that** the aluminium oxide particles have an average diameter from a range from 2 µm to 500 µm, more particularly from a range from 2 µm to 200 µm, very particularly from a range from 40 µm to 150 µm.

9. Highly cohesive, thermally conducting, pressure-sensitive adhesive according to any of Claims 1 to 8, **characterized in that** the aluminium oxide particles are present in the pressure-sensitive adhesive in a fraction of at least 20% by weight and not more than 90% by weight, more particularly of at least 40% by weight and not more than 80% by weight, based in each case on the total mass of the pressure-sensitive adhesive.

10. Highly cohesive, thermally conducting, pressure-sensitive adhesive according to any of Claims 1 to 9, obtainable in a process in which
the at least substantially solvent-free polymer composition is softened thermally without addition of solvent,
the aluminium oxide particles are added to the softened polymer composition, and
the softened polymer composition and the aluminium oxide particles are combined with one another mechanically.

11. Process for preparing a highly cohesive, thermally conducting, pressure-sensitive adhesive, in which
an at least substantially solvent-free polymer composition comprising a high molecular mass, acrylate-based base polymer is softened thermally without addition of solvent, where the base polymer has an average molecular mass M_{w} of at least 500 000 g/mol,
aluminium oxide particles whose fraction of alpha-aluminium oxide is more than 95% by weight are added to the softened polymer composition, and
the softened polymer composition and the aluminium oxide particles are combined with one another mechanically.

12. Use of aluminium oxide particles which are composed in a fraction of more than 95% by weight of alpha-aluminium oxide in a pressure-sensitive adhesive.

13. Use of a highly cohesive, thermally conducting, pressure-sensitive adhesive according to any of Claims 1 to 10 for producing a thermally conducting sheetlike element.

14. Thermally conducting sheetlike element with a highly cohesive, thermally conducting, pressure-sensitive adhesive according to any of Claims 1 to 10.

15. Use of a highly cohesive, thermally conducting, pressure-sensitive adhesive according to any of Claims 1 to 10 for thermal transport within electronic devices.

## Revendications

1. Composition adhésive sensible à la pression thermoconductrice et hautement cohésive, comprenant une composition polymère et des particules d'oxyde d'aluminium,
la composition polymère étant une composition polymère au moins essentiellement exempte de solvant qui contient un polymère de base de masse moléculaire élevée à base d'acrylate,
le polymère de base présentant une masse moléculaire moyenne M_{w} d'au moins 500 000 g/mol,
**caractérisée en ce que**
les particules d'oxyde d'aluminium sont constituées d'oxyde d'aluminium alpha en une proportion supérieure à 95 % en poids.

2. Composition adhésive sensible à la pression thermoconductrice et hautement cohésive selon la revendication 1, **caractérisée en ce que** le polymère de base contient des unités monomères comprenant des groupes acide libres et/ou des groupes hydroxy libres.

3. Composition adhésive sensible à la pression thermoconductrice et hautement cohésive selon la revendication 1 ou 2, **caractérisée en ce que** la composition polymère contient des unités monomères du groupe comprenant les acrylates, les méthacrylates, leurs esters et les dérivés de ceux-ci en une proportion d'au moins 50 % en poids.

4. Composition adhésive sensible à la pression thermoconductrice et hautement cohésive selon l'une quelconque des revendications 1 à 3, **caractérisée en ce que** la composition polymère a une teneur en solvant inférieure à 0,1 % en poids.

5. Composition adhésive sensible à la pression thermoconductrice et hautement cohésive selon l'une quelconque des revendications 1 à 4, **caractérisée en ce que** le polymère de base présente une masse moléculaire moyenne M_{w} supérieure à 1 000 000 g/mol.

6. Composition adhésive sensible à la pression thermoconductrice et hautement cohésive selon l'une quelconque des revendications 1 à 5, **caractérisée en ce que** les particules d'oxyde d'aluminium sont constituées d'oxyde d'aluminium alpha en une proportion de 97 % en poids ou plus.

7. Composition adhésive sensible à la pression thermoconductrice et hautement cohésive selon l'une quelconque des revendications 1 à 6, **caractérisée en ce que** les particules d'oxyde d'aluminium présentent une surface spécifique relative à la masse d'au plus 1,3 m²/g, de préférence inférieure à 1,0 m²/g.

8. Composition adhésive sensible à la pression thermoconductrice et hautement cohésive selon l'une quelconque des revendications 1 à 7, **caractérisée en ce que** les particules d'oxyde d'aluminium présentent un diamètre moyen dans une plage allant de 2 µm à 500 µm, notamment dans une plage allant de 2 µm à 200 µm, tout particulièrement dans une plage allant de 40 µm à 150 µm.

9. Composition adhésive sensible à la pression thermoconductrice et hautement cohésive selon l'une quelconque des revendications 1 à 8, **caractérisée en ce que** les particules d'oxyde d'aluminium sont présentes dans la composition adhésive sensible à la pression en une proportion d'au moins 20 % en poids et d'au plus 90 % en poids, notamment d'au moins 40 % en poids et d'au plus 80 % en poids, à chaque fois par rapport à la masse totale de la composition adhésive sensible à la pression.

10. Composition adhésive sensible à la pression thermoconductrice et hautement cohésive selon l'une quelconque des revendications 1 à 9, pouvant être obtenue par un procédé selon lequel
la composition polymère au moins essentiellement exempte de solvant est ramollie thermiquement sans ajout de solvant,
les particules d'oxyde d'aluminium sont ajoutées à la composition polymère ramollie, et
la composition polymère ramollie et les particules d'oxyde d'aluminium sont mélangées ensemble mécaniquement.

11. Procédé de fabrication d'une composition adhésive sensible à la pression thermoconductrice et hautement cohésive, selon lequel
une composition polymère au moins essentiellement exempte de solvant contenant un polymère de base de masse moléculaire élevée à base d'acrylate est ramollie thermiquement sans ajout de solvant, le polymère de base présentant une masse moléculaire moyenne M_{w} d'au moins 500 000 g/mol,
des particules d'oxyde d'aluminium sont ajoutées à la composition polymère ramollie, leur proportion d'oxyde d'aluminium alpha étant supérieure à 95 % en poids, et
la composition polymère ramollie et les particules d'oxyde d'aluminium sont mélangées ensemble mécaniquement.

12. Utilisation de particules d'oxyde d'aluminium, qui sont constituées d'oxyde d'aluminium alpha en une proportion supérieure à 95 % en poids, dans une composition adhésive sensible à la pression.

13. Utilisation d'une composition adhésive sensible à la pression thermoconductrice et hautement cohésive selon l'une quelconque des revendications 1 à 10 pour la fabrication d'un élément plan thermoconducteur.

14. Élément plan thermoconducteur comprenant une composition adhésive sensible à la pression thermoconductrice et hautement cohésive selon l'une quelconque des revendications 1 à 10.

15. Utilisation d'une composition adhésive sensible à la pression thermoconductrice et hautement cohésive selon l'une quelconque des revendications 1 à 10 pour le transport de chaleur dans des appareils électroniques.
